**Europäisches Patentamt**

**European Patent Office**

**Office européen des brevets**

(11) Veröffentlichungsnummer: **0 234 290 B1**

(12) **EUROPÄISCHE PATENTSCHRIFT**

(45) Veröffentlichungstag der Patentschrift:
06.09.89

(51) Int. Cl.⁴: **B60T 13/66, B60T 13/26**

(21) Anmeldenummer: 87100921.3

(22) Anmeldetag: 23.01.87

(54) Elektropneumatische Bremseinrichtung für Fahrzeuge.

(30) Priorität: 26.02.86 DE 3606085

(43) Veröffentlichungstag der Anmeldung:
02.09.87 Patentblatt 87/36

(45) Bekanntmachung des Hinweises auf die Patenterteilung:
06.09.89 Patentblatt 89/36

(84) Benannte Vertragsstaaten:
DE FR IT NL SE

(56) Entgegenhaltungen:
EP-A- 0 207 275
DE-A- 2 840 262
GB-A- 2 131 509
US-A- 3 799 623

(73) Patentinhaber: KNORR-BREMSE AG, Moosacher Strasse 80 Postfach 401060, D-8000 München 40(DE)

(72) Erfinder: Broch, Walter, Hauptstrasse 15,
D-8061 Wiedenzhausen(DE)
Erfinder: Straub, Laszlo, Max-Löw-Strasse 12,
D-8014 Neubiberg(DE)
Erfinder: Vollmer, Otto, Joergstrasse 31,
D-8000 München 21(DE)

## Beschreibung

Die Erfindung betrifft eine elektropneumatische Bremseinrichtung für Fahrzeuge, mit einer Betriebsbremse, umfassend ein zweikreisiges Betriebsbremsbedienorgan zur über zwei Steuerelektroniken und zwei diesen nachgeordnete elektropneumatische Wandler bewirkbaren, getrennten Steuerung der Druckluftbeaufschlagung von Vorder- und Hinterachsbremszylindern, und mit einer Hilfsbremse, umfaßend ein Hilfsbremsbedienorgan zur Steuerung der Druckluftbeaufschlagung wenigstens eines der Hinterachse zugeordneten Federspeicherzylinders, wobei die Steuerelektroniken eine bei ihrem Ansprechen ein Entlüften des Federspeicherzylinders auslösende, bei Ausfall eines Betriebsbremskreises oder dessen Steuerung ansprechende Fehlererkennung aufweisen.

Eine derartige Bremseinrichtung ist mit der nach Art. 54 (3) EPÜ zitierten, nicht vorveröffentlichten EP-A 0 207 275 (entspricht der ebenfalls nicht vorveröffentlichten DE-Patentanmeldung P 3 521 486) bereits vorgeschlagen worden. Nach der älteren Anmeldung erfolgt die Bremssteuerung rein elektrisch, erst unmittelbar vor den Bremszylindern, dem Federpeicherbremszylinder und der Anhängerbremsleitung erfolgt eine Umsetzung elektrischer Steuersignale durch elektropneumatische Wandler, im weiteren EP-Wandler genannt, in pneumatische Drücke. Bei dieser Bremseinrichtung ist zwar im Fahrerhaus keine pneumatische Einrichtung erforderlich, doch muß für die Hilfsbremse ein regelbares Hilfsbremsbedienorgan vorgesehen werden und der elektrische Steueraufwand ist beachtlich hoch. Weiterhin ist die Bremseinrichtung nach der älteren Patentanmeldung mit der Eigenheit versehen, daß bei Ausfall eines Betriebsbremskreises die Hilfsbremse nicht selbsttätig derart eingeschaltet wird, daß sie bei Betätigen des Betriebsbremsbedienorgans zur Wirkung gelangt, es ist vielmehr erforderlich, zusätzlich das Hilfsbremsbedienorgan zu betätigen, um die Hilfsbremse zur Wirkung gelangen zu lassen.

Es ist Aufgabe der Erfindung, eine elektropneumatische Bremseinrichtung der eingangs genannten Art derart auszugestalten, daß sie nur einen geringen Bauaufwand erfordert, wobei nach Ansprechen der Fehlererkennung, also bei Vorliegen eines Fehlers, die Hilfsbremse selbsttätig bei Betätigung der Betriebsbremse entsprechend deren Betätigungsstärke mitbetätigt wird.

Diese Aufgabe wird nach der Erfindung dadurch gelöst, daß das Betriebsbremsbedienorgan ein negatives, bei Betätigung des Betriebsbremsbedienorgans eine Druckabsenkung bewirkendes, zusätzliches Regelventil aufweist, das aus einer eine Regeldruckhöhe aufweisenden Druckluftquelle gespeist ist und dessen ausgesteuerter Druck über ein Magnetventil und ein diesem nachgeordnetes Hilfsbremsbedienorgan dem Federspeicherzylinder zuführbar ist, wobei das Magnetventil von der Fehlererkennung erregbar ist und nur bei Vorliegen eines Fehlers den Eingang des Hilfsbremsbedienorgans von einer bei fehlerfreiem Betrieb mit diesem verbundenen Speiseleitung zur Druckluftquelle absperrt und mit dem bei fehlerfreiem Betrieb abgesperrten, vom Regelventil ausgesteuerten Druck beaufschlagt, und wobei das Hilfsbremsbedienorgan bei Betätigung einen in seinem unbetätigten Zustand geöffneten Durchgang zum Federspeicherzylinder schließt und letzteren entlüftet.

Durch eine derartige Ausbildung wird unter Inkaufnahme einer pneumatischen Leitung zum Fahrerhaus eine sehr einfache Ausbildung der Bremseinrichtung erreicht, wobei als Hilfsbremsbedienorgan lediglich ein einfaches, nicht stufbares Schaltventil erforderlich ist. Zudem wird sichergestellt, daß nach Erkennen eines Fehlers die Hilfsbremse bei Betätigung der Betriebsbremse selbsttätig betätigungsstärkenabhängig abgestuft mitbetätigt wird. Im Hinblick auf die Bremseinrichtung nach der älteren Anmeldung entfallen insbesondere die aufwendige, sichere Stromversorgung sowie der gesonderte EP-Wandler für die Hilfsbremse.

Die Unteransprüche zeigen nach der weiteren Erfindung zweckmäßige und vorteilhafte, weitere Ausbildungsmöglichkeiten für die Bremseinrichtung auf.

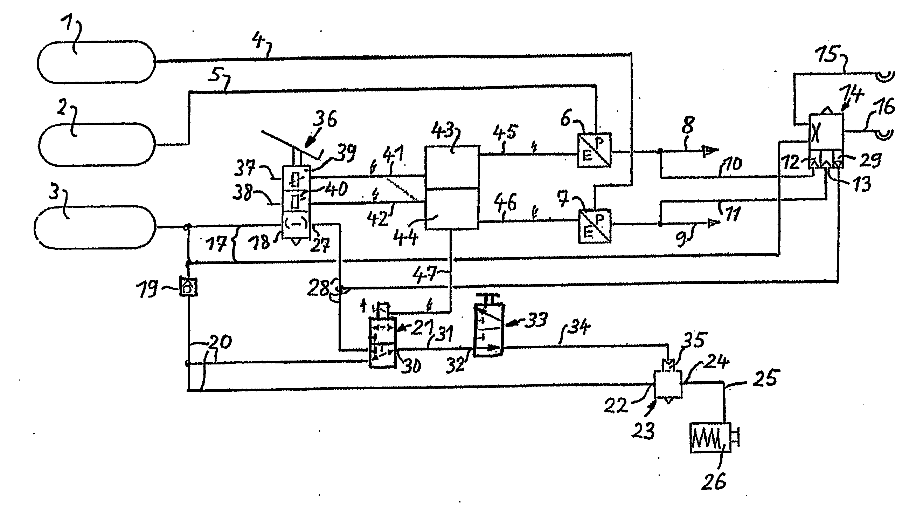

In der Zeichnung ist ein Ausführungsbeispiel für eine nach der Erfindung ausgebildete, elektropneumatische Bremseinrichtung schematisch in ihren für die Erfindung wesentlichen Teilen dargestellt.

In der Zeichnung sind drei gesonderte Luftbehälter l,2 und 3 dargestellt, welche vermittels eines nichtgezeigten Kompressors und vorzugsweise ein Schutzventil üblicher Bauart mit durch einen Druckregler geregelte Druckhöhe aufweisender Druckluft versorgt werden. Von den beiden Luftbehältern l und 2 führen gesonderte Druckluftleitungen 4 und 5 zu den Eingängen zweier EP-Wandler 6 und 7. An den Ausgang des EP-Wandlers 6 sind mittels einer Rohrleitung 8 die nichtdargestellten Vorderachsebremszylinder und an den EP-Wandler 7 sind mittels einer Rohrleitung 9 die ebenfalls nichtdargestellten Hinterachsbremszylinder des Fahrzeuges angeschlossen. Von den Rohrleitungen 8 und 9 führen Zweigleitungen l0 bzw. ll zu den Betriebsbrems-Steuereingängen l2 und l3 eines Anhängersteuerventils l4 üblicher Bauart. Vom Anhängersteuerventil l4 geht eine Druckluftvorratsleitung l5 und eine Anhängerbremsleitung l6 aus, welche mittels üblicher Kupplungsköpfe mit einer üblichen, nichtdargestellten Zweileitungsbremsanlage eines Anhängers kuppelbar sind.

Vom Luftbehälter 3 führt eine Speiseleitung l7 zum Eingang eines Regelventils l8 und zum Speiseanschluß des Anhängersteuerventils l4, welcher in üblicher Weise überwacht mit der Druckluftvorratsleitung l5 verbindbar ist. An die Speiseleitung l7 ist über ein in dieser Strömungsrichtung Öffnendes Rückschlagventil l9 eine weitere Speiseleitung 20 angeschlossen, welche zu einem Eingang eines 3/2-Wegeventils, das als Magnetventil 2l ausgebildet ist, und zum Eingangsanschluß 22 eines Relaisventils 23 führt. Der Ausgangsanschluß 24 des Relaisventils 23 steht über eine Rohrleitung 25 mit dem Beaufschlagungsraum wenigstens eines Federspeicherzylinders 26 in Verbindung, welcher die Reibungsbremse der Hinterachse des Fahrzeuges zu betätigen vermag.

Vom Ausgangsanschluß 27 des Regelventils 18 führt eine Steuerleitung 28 zu einem zweiten Eingang des Magnetventils 21 und zu einem Hilfsbremssteuereingang 29 des Anhängersteuerventils 14. Der Ausgang 30 des Magnetventils 21 steht über eine Steuerleitung 31 mit einem Eingang 32 eines als 3/2-Wegeventils ausgebildeten Hilfsbremsbedienorgangs 33 in Verbindung. Der Ausgang des Hilfsbremsbedienorgans 33 steht über eine weitere Steuerleitung 34 mit dem Steuereingang 35 des Relaisventils 23 in Verbindung.

Das durch Ruhestrom erregbare Magnetventil 21 verbindet im erregten Zustand seinen Ausgang 30 mit der Speiseleitung 20, im unerregten Zustand sperrt es diese Verbindung ab und schließt statt dessen seinen Ausgang 30 an die Steuerleitung 28 an, welche zuvor abgesperrt war. Das Hilfsbremsbedienorgan 33 verbindet im unbetätigten Zustand die Steuerleitung 34 mit seinem Eingang 32, bei Betätigung sperrt es diese Verbindung ab und entlüftet die Steuerleitung 34 zur Atmosphäre.

Das Regelventil 18 gehört einem elektrisch zweikreisigem Betriebsbremsbedienorgan 36 zu, welches aus einer nichtgezeigten Stromversorgung über Kabel 37 bzw. 38 mit elektrischer Energie versorgt wird, zwei getrennte, elektrische Regelglieder 39 und 40 beinhaltet und über zwei Steuerkabel 41 und 42 seiner jeweiligen Betätigungsstärke entsprechende, elektrische Steuersignale zwei Steuerelektroniken 43 bzw. 44 zuführt. Das Regelventil 18 weist eine negative Steuercharaterestik auf, im unbetätigten Zustand des Betriebsbremsbedienorgans 36 speist es also in seinen Ausgangsanschluß 27 einen Aussteuerdruck ein, welcher im wesentlichen der Druckhöhe in der Speiseleitung 17 entspricht, bei Betätigung des Betriebsbremsbedienorgans 36 dagegen vermindert es den in den Ausgangsanschluß 27 ausgesteuerten Druck entsprechend seiner Betätigungsstärke. Die gegebenenfalls zu einer Baueinheit zusammengefaßte, beiden Steuerelektroniken 43 und 44 verarbeiten die ihnen durch die Steuerkabel 41 bzw. 42 zugeführten Signale, gegebenenfalls unter Abänderung durch weitere, ihnen zugeführte Steuergrößen, die beispielsweise den Achsbelastungen des Fahrzeuges, Verzögerungen des Fahrzeuges und/oder Fahrzeugradgleitvorgängen entsprechen können, zu elektrischen Ausgangssignalen, welche durch Steuerkabel 45 bzw. 46 den EP-Wandlern 6 und 7 zugeführt werden, welche in die Rohrleitungen 8 und 9 entsprechende Bremsdruckhöhen einspeisen. Von den durch eine nichtgezeigte Einrichtung mit elektrischer Energie versorgten Steuerelektroniken 43 und 44 führt ein Kabel 47 zur andererseits an eine Rückführung angeschlossenen Erregungsspule des Magnetventils 21; bei betriebsbereiter, in Ordnung befindlicher Betriebsbremssteuerung führt das Kabel 47 Strom und das Magnetventil 21 ist somit erregt. Die Betriebsbereitschaft der Betriebsbremssteuerung kann beispielsweise durch in die Rohrleitungen 8 und 9 eingeordnete, nichtdargestellte Druckwandler zum Rückmelden der in diese Rohrleitung ausgesteuerten Drücke mittels entsprechender Signale zu den Steuerelektroniken 43 und 44 feststellbar sein. Bei Auftreten eines Fehlers in der Betriebsbremsanlage springt eine in den Steuerelektroniken 43 und 44 integrierte Fehlererkennung an und trennt das Kabel 47 von seiner Stromversorgung ab, so daß das Magnetventil 21 entregt wird und abfällt.

Bei betriebsbereiter, in Ordnung befindlicher Bremseinrichtung befindet sich diese in der dargestellten Lage, wobei das unbetätigte Betriebsbremsbedienorgan 36 über die Steuerelektroniken 43 und 44 sowie die EP-Wandler 6 und 7 die Rohrleitungen 8 und 9 drucklos hält.

Das Regelventil 18 steuert in die Steuerleitung 28 Regeldruckhöhe aus dem Luftbehälter 3 ein, das Magnetventil 21 ist erregt und verbindet die Speiseleitung 20 über das unbetätigte Hilfsbremsbedienorgan 33 mit dem Steuereingang 35 des Relaisventils 22, das infolge dessen aus der Speiseleitung 20 Regeldruckhöhe in den Federspeicherzylinder 26 einspeist und diesen in Lösestellung hält. Über das Anhängersteuerventil 14 ist die Druckluftvorratsleitung 15 mit Regeldruckhöhe beaufschlagt, während die Anhängerbremsleitung 16 drucklos ist.

Bei Betätigen des Betriebsbremsbedienorgans 36 werden in die Rohrleitungen 8 und 9 der Betätigungsstärke entsprechende Druckhöhe eingespeist, so daß das Fahrzeug entsprechend gebremst wird. Die gleichzeitige Betätigung des Regelventils 18 senkt zwar die in der Steuerleitung 28 anstehende Druckhöhe ab, über das erregte Magnetventil 21 und das Relaisventil 23 bleibt jedoch der Federspeicher 26 voll druckbeaufschlagt. Die Ansteuerung des Anhängersteuerventils 14 durch die Zweigleitungen 10 und 11 sowie die Steuerleitung 28 bewirkt ein Einspeisen einer der Bremsstärke entsprechenden Druckhöhe in die Anhängerbremsleitung 16.

Fällt bei unbetätigtem Betriebsbremsbedienorgan 36 die elektrische Bremssteuerung aus, so wird das Magnetventil 21 entregt und schaltet um; dies bleibt jedoch ohne Auswirkung für den Federspeicher 26, da dann der Steuereingang 35 des Relaisventils 23 über das unbetätigte Regelventil 18 mit Regeldruckhöhe versorgt wird. Erst bei Betätigen des Betriebsbremsbedienorgans 36 erfolgt über das Regelventil 18 eine Druckabsenkung in der Steuerleitung 28, wodurch über das Relaisventil 23 auch der Beaufschlagungsdruck für den Federspeicherzylinder 26 entsprechend abgesenkt und die Hilfsbremse entsprechend betätigt wird. Zugleich wird über die Steuerleitung 28 auch bei durch die Störung unbeaufschlagt bleibenden Zweigleitungen 10 und/oder 11 das Anhängersteuerventil 14 veranlaßt, in die Anhängerbremsleitung 16 eine der Bremsstärke entsprechende Druckhöhe einzuspeisen.

Fällt während einer Betriebsbremsung die elektrische Bremssteuerung ganz oder teilweise aus, so wird über die Fehlererkennung ebenfalls das Magnetventil 21 erregt und schaltet um, wodurch der Steuereingang 35 von der Speiseleitung 20 abgetrennt und mit der in ihrem Druck abgesenkten Steuerleitung 28 verbunden wird: es erfolgt somit selbsttätig, ohne weiteren Bedienvorgang durch den Fahrzeugführer, eine der jeweiligen Bremsstärke entsprechende Druckabsenkung im Federspeicherzylinder 26 und damit Betätigung der Hilfsbremse, wobei auch die Anhängerbremsung aufrechterhalten bleibt.

Bei Betätigung des Hilfsbremsbedienorgans 33 wird in jedem Falle der Steuereingang 35 des Relaisventils 23 entlüftet, so daß das Relaisventil 23 den Federspeicher 26 ebenfalls entlüftet und die Hilfsbremse voll einbremst.

Es ergibt sich somit, daß, falls die Steuerelektroniken 43 und 44 derart gekoppelt sind, daß jede von den Steuerkabeln 41 und 42 ansteuerbar ist und jeden der beiden EP-Wandler 6 und 7 anzusteuern vermag, wie es nach der bereits erwähnten DE-Anmeldung P 35 21 486 vorgesehen ist, bei elektrischem Kreisausfall die volle Wirkung der Betriebsbremsanlage - gegebenenfalls durch verstärkte Abbremsung der Hinterachse - erhalten bleibt. Falls jedoch die beiden elektrischen Steuerkreise getrennt sind, wobei jede Steuerelektronik 43 und 44 nur vom ihr zugeordneten Steuerkabel 41 bzw. 42 ansteuerbar ist und ihrerseits nur das ihr zugeordnete EP-Ventil 6 oder 7 anzusteuern vermag, so ergibt sich bei Ausfall der elektrischen Steuerung für den Hinterachs-Bremskreis durch selbsttätiges Einsetzen der Hilfsbremse eine wenigstens annähernd der Betätigungsstärke des Betriebsbremsbedienorgans 36 entsprechende Bremswirkung. Falls bei dieser Ausbildung die elektrische Steuerung für den Vorderachsbremskreis ausfällt, können je nach Ansteuerung des Kabels 47 wahlweise unterschiedliche Folgen bewirkt werden: falls bei bloßem Ausfall der elektrischen Bremssteuerung für den Vorderachsbremskreis das Kabel 47 durch die Fehlererkennung stromführend bleibt, bleibt die Betriebsbremswirkung für die Fahrzeughinterachse voll erhalten, während, falls beim angegebenen Störungsfall durch die Fehlerüberwachung die Stromführung des Kabels 47 unterbrochen wird, die Hilfsbremse betätigt wird und die Hinterachse des Fahrzeuges somit verstärkt abgebremst wird.

Insgesamt weist somit die Bremseinrichtung die Vorteile auf, daß keine weitere Bedieneinheit zum Sicherstellen der Hinterachs-Abbremsung bei Ausfall der elektrischen Bremssteuerung notwendig ist, daß für die Bremse lediglich ein nichtstufbares, einfaches Schaltventil erforderlich ist, daß kein gesonderter EP-Wandler für die Anhängeransteuerung erforderlich ist, daß auch für die Hilfsbremse kein EP-Wandler nötig ist, und daß auch für die elektrische Bremssteuerung kein hoher Sicherungsaufwand, beispielsweise für eine sichere Stromversorgung, nötig ist.

<u>Bezugszeichenliste</u>

1 Luftbehälter
2 Luftbehälter
3 Luftbehälter
4 Druckluftleitung
5 Druckluftleitung
6 EP-Wandler
7 EP-Wandler
8 Rohrleitung
9 Rohrleitung
10 Zweigleitung
11 Zweigleitung
12 Betriebsbremssteuereingang
13 Betriebsbremssteuereingang
14 Anhängersteuerventil
15 Druckluftvorratsleitung
16 Anhängerbremsleitung
17 Speiseleitung
18 Regelventil
19 Rückschlagventil
20 Speiseleitung
21 Magnetventil
22 Eingangsanschluß
23 Relaisventil
24 Ausgangsanschluß
25 Rohrleitung
26 Federspeicherzylinder
27 Ausgangsanschluß
28 Steuerleitung
29 Hilfsbremssteuereingang
30 Ausgang
31 Steuerleitung
32 Eingang
33 Hilfsbremsbedienorgan
34 Steuerleitung
35 Steuereingang
36 Betriebsbremsbedienorgan
37 Kabel
38 Kabel
39 Regelglied
40 Regelglied
41 Steuerhebel
42 Steuerhebel
43 Steuerelektronik
44 Steuerelektronik
45 Steuerkabel
46 Steuerkabel
47 Kabel

**Patentansprüche**

1. Elektropneumatische Bremseinrichtung für Fahrzeuge, mit einer Betriebsbremse, umfassend ein zweikreisiges Betriebsbremsbedienorgan (36) zur über zwei Steuerelektroniken (43; 44) und zwei diesen nachgeordnete elektropneumatische Wandler (6; 7) bewirkbaren, getrennten Steuerung der Druckluftbeaufschlagung von Vorder- und Hinterachsbremszylindern, und mit einer Hilfsbremse, umfassend ein Hilfsbremsbedienorgan (33) zur Steuerung der Druckluftbeaufschlagung wenigstens eines der Hinterachse zugeordneten Federspeicherzylinders (26), wobei die Steuerelektroniken (43; 44) eine bei ihrem Ansprechen ein Entlüften des Federspeicherzylinders (26) auslösende, bei Ausfall eines Betriebsbremskreises oder dessen Steuerung ansprechende Fehlererkennung aufweisen, dadurch gekennzeichnet, daß das Betriebsbremsbedienorgan (36) ein negatives, bei Betätigung des Betriebsbremsbedienorgans (36) eine Druckabsenkung bewirkendes, zusätzliches Regelventil (18) aufweist, das aus einer eine Regeldruckhöhe aufweisenden Druckluftquelle (3) gespeist ist und dessen ausgesteuerter Druck über ein Magnetventil (21) und ein diesem nachgeordnetes Hilfsbremsbedienorgan (33) dem Federspeicherzylinder (26) zuführbar ist, wobei das Magnetventil (21) von der Fehlererkennung erregbar ist und nur bei Vorliegen eines Fehlers den Eingang (32) des Hilfsbremsbedienorgans (33) von einer bei fehlerfreiem Betrieb mit diesem verbundenen Speiseleitung (20) zur Druckluftquelle (3) absperrt und mit dem bei fehlerfreiem Betrieb abgesperrten, vom Regelventil (18) ausgesteuerten Druck beaufschlagt, und wobei das Hilfsbremsbedienorgan (33) bei Betätigung einen in seinem unbetätigten Zustand geöffneten Durchgang zum Federspeicherzylinder (26) schließt und letzteren entlüftet.

2. Bremseinrichtung nach Anspruch 1, dadurch gekennzeichnet, daß das Hilfsbremsbedienorgan (33) ein 3/2-Wegeventil ist.

3. Bremseinrichtung nach Anspruch 1 oder 2, dadurch gekennzeichnet, daß in der Speiseleitung (20) dem Magnetventil (21) ein Rückschlagventil (19) vorgeschaltet ist.

4. Bremseinrichtung nach Anspruch 3, gekennzeichnet durch ein zwischen das Hilfsbremsbedienorgan (33) und den Federspeicherzylinder (26) eingeordnetes Relaisventil (23), dessen Steuereingang (35) an das Hilfsbremsbedienorgan (33), dessen Eingang (22) über das Rückschlagventil (19) an den Druckluftvorrat (3) und dessen Ausgang (24) an den Federspeicherzylinder (26) angeschlossen ist.

5. Bremseinrichtung nach Anspruch 1, 2, 3 oder 4, mit einer Zweileitungsanhänger-Bremssteuervorrichtung, gekennzeichnet durch ein von den Beaufschlagungsdrücken der Vorder- und Hinterachsbremszylinder ansteuerbares Zweileitungsanhänger-Steuerventil (14), dessen der Hilfsbremse zugeordneter Steuereingang (29) mit Steuervorrang vor den anderen Steuereingängen (12; 13) versehen und vom ausgesteuerten Druck des Regelventils (18) beaufschlagt ist.

## Claims

1. Electropneumatic braking device, comprising a service brake, including a dual-circuit service brake actuating device (36) for separate control of compressed air admission to the front and rear axle brake actuators, performable by means of two electronic control units (43; 44) and two electropneumatic converters (6; 7), subordinate to the latter, and a secondary brake, including a secondary brake actuating device (33) for control of compressed air admission to at least one spring brake actuator (26), associated to the rear axle, the electronic control units (43; 44) being provided with an error detection feature, said electronic control units (43; 44), when being activated, causing the spring brake actuator (26) to be vented, in the event of a failure of one of the service brake circuits or its control triggering the error detection feature, wherein the service brake actuating device (36) comprises a negative additional control valve (18), by means of which, when being actuated, a pressure drop is produced, said control valve (18) being supplied from a compressed air supply source (3) having system pressure, the output pressure of which control valve (18) being capable of being fed to the spring brake actuator (26), via a solenoid valve (21) and a secondary brake actuating device (33), subordinate to the latter, the solenoid valve (21) being capable of being energized by the error detection feature and, only in the event of a failure, shutting off the inlet (32) of the secondary brake actuating device (33) from one supply line (20), linked with the compressed air supply source (3) — which secondary brake actuating device (33), in case of correct operation would be connected to said supply line (20) — and charging said inlet (32) with the output pressure of relay valve (18) — which output pressure, in the event of a proper operation would be shut off — the secondary brake actuating device (33), when being actuated, closing the passage — which in non-operated condition of said secondary brake actuating device (33) would be free — to the spring bake actuator (26) and venting the latter.

2. Braking device according to Claim 1, wherein the service brake actuating device (33) consists of a 3/2-way valve.

3. Braking device according to Claims 1 or 2, wherein a check valve (19) is arranged in the supply line (20) upstream of the solenoid valve (21).

4. Braking device according to Claim 3, wherein a relay valve (23) is arranged between the secondary brake actuating device (33) and the spring brake actuator (26), the control port (35) of said relay valve (23) being connected to the secondary brake actuating device (33), the inlet port (22) of which being connected to the compressed air supply (3), through the check valve (19), and the outlet port (24) of which being connected to the spring brake actuator (26).

5. Braking device according to Claims 1, 2, 3 or 4, comprising a two-line trailer brake control device, wherein a two-line trailer control valve (14), capable of being piloted by the admission pressures of the front and rear axle brake actuators, has been provided, the control port of said two-line trailer control valve, associated to the secondary brake having a control priority over the other control ports (12; 13) and being pressurized by the outlet pressure of control valve (18).

## Revendications

1. Installation électro-pneumatique de freinage pour véhicules, comportant un frein de service comprenant un organe de manœuvre (36), à deux circuits, du frein de service pour la commande séparée de la charge en air comprimé de cylindres de frein de l'essieu avant et arrière, par l'intermédiaire de deux électroniques de commande (43; 44) et deux transducteurs électro-pneumatiques (6; 7) montés en aval de ces dernières, ainsi qu'un frein de secours comprenant un organe de manœuvre (33) du frein de secours pour commander la charge en air comprimé d'au moins un cylindre de frein à ressort accumulateur (26) associé à l'essieu arrière, les électroniques (43; 44) comportant un détecteur de défaut qui déclenche, lors de sa réponse, une désaération du cylindre de frein à ressort (26) et qui répond lors de la défaillance d'un circuit du frein de service ou lors de la commande de ce dernier, caractérisée par le fait que l'organe du manœuvre du frein de service (36) comporte une soupape de réglage négative supplémentaire (18) provoquant une chute de pression lors de la manœuvre dudit organe (36), soupape de réglage qui est alimentée à partir d'une source d'air comprimé (3) dans laquelle règne un niveau de pression de réglage et dont la pression qui a été ajustée est susceptible d'être appliquée au cylindre de frein à ressort accumulateur (26), par l'intermédiaire d'une électrovanne et d'un organe de manœuvre du frein de secours (33) monté en aval de cette électrovanne, la réalisation étant telle que l'électrovanne (21) est susceptible d'être excitée par le détecteur de défaut et n'isole, que lors de la présence d'un défaut, l'entrée (32) de l'organe de manœuvre (33) du frein de secours d'une conduite d'alimentation (20) menant à la source d'air comprimé (3) et reliée à cette entrée dans le cas d'un fonctionnement sans défaut, et ne la charge par la pression ajustée par la soupape de réglage (18) et sans action dans le cas du fonctionnement dépourvu de défaut, alors que l'organe de manœuvre (33) du frein de secours ferme, lorsqu'il est actionné, un passage vers le cylindre à ressort accumulateur (23), qui est ouvert lorsque ledit organe de manœuvre n'est pas actionné, et provoque la désaération dudit cylindre.

2. Installation de freinage selon la revendication 1, caractérisé par le fait que l'organe de manœuvre (33) du frein de secours est une soupape à 3/2 voies.

3. Installation de freinage selon la revendication 1 ou 2, caractérisé par le fait que dans la conduite d'alimentation (20), une soupape de retenue (19) est montée en amont de l'électrovanne (21).

4. Installation de freinage selon la revendication 3, caractérisée par une soupape de relais (23) montée entre l'organe de manœuvre (33) du frein de secours et le cylindre de frein à ressort accumulateur (26), soupape de relais dont l'entrée (22) est reliée, par l'intermédiaire de la soupape de retenue (19), à la réserve en air comprimé (3) et dont la sortie (24) est reliée au cylindre de frein à ressort accumulateur (26).

5. Installation de frein selon la revendication 1, 2, 3, ou 4, comportant un dispositif de commande du frein de remorque à deux conduites, caractérisée par une soupape de commande (14) de la remorque à deux conduites, susceptible d'être commandée par les pressions de charge des cylindres du frein de l'essieu avant et arrière, et dont l'entrée de commande (29) qui est associée au frein de secours, est affectée d'une commande prioritaire par rapport aux autres entrées de commande (12; 13) et est chargée par la pression ajustée par la soupape de relais (18).